# EUROPÄISCHE PATENTSCHRIFT

(11) **EP 3 551 419 B1**
(45) Veröffentlichungstag und Bekanntmachung des Hinweises auf die Patenterteilung: **24.03.2021**
(21) Anmeldenummer: 17780676.7
(22) Anmeldetag: 27.09.2017
(51) Int. Cl.: B29C 45/28, B29C 45/04, B29C 33/34, B29L 31/34

(54) **VORRICHTUNG UND VERFAHREN ZUM HERSTELLEN VON OBJEKTEN AUS EINER ERSTARRENDEN FORMMASSE MIT SCHIEBEREINRICHTUNG**
DEVICE AND METHOD FOR PRODUCING OBJECTS FROM A SOLIDIFYING MOULDING COMPOUND WITH A PUSHER DEVICE
DISPOSITIF ET PROCÉDÉ POUR LA FABRICATION D'OBJETS À PARTIR D'UNE MATIÈRE À MOULER DURCISSABLE À L'AIDE D'UN DISPOSITIF COULISSANT

(30) Priorität: 09.12.2016 DE 102016224581
(43) Veröffentlichungstag der Anmeldung: 16.10.2019
(73) Patentinhaber: LEONI Kabel GmbH, 91154 Roth (DE)
(72) Erfinder: WENZEL, Joerg, 91154 Roth (DE)
(74) Vertreter: Frenkel, Matthias Alexander
(86) Internationale Anmeldenummer: PCT/EP2017/074495
(87) Internationale Veröffentlichungsnummer: WO 2018/103907

(56) Entgegenhaltungen:
- DE-A1-102014 226 335
- FR-A- 1 176 153
- JP-A- H06 226 774
- JP-A- H08 336 865
- GOTTFRIED STEINER ET AL: "Exjection: Dem Spritzgießen um Längen voraus", KUNSTSTOFFE, Bd. 2008, Nr. 4, 30. April 2008 (2008-04-30), Seiten 51-55, XP055189095, München

## Beschreibung

Die Offenbarung betrifft eine Vorrichtung zum Herstellen von Objekten aus einer erstarrenden Formmasse sowie ein diesbezügliches Verfahren.

Beim Herstellen von Objekten aus einer erstarrenden Formmasse ist es bekannt, dass nur bestimmte erstarrte Bereiche der Formmasse als tatsächliches Objekt und Endprodukt weiterverwendet werden sollen. Hingegen existieren zunächst oftmals nicht dauerhaft erwünschte Konturen an dem Objekt, zum Beispiel in Form von Graten, erstarrten Angusskanälen oder dergleichen. Diese müssen in gesonderten Nachbearbeitungsschritten entfernt werden, was zusätzlichen Arbeitsaufwand bedeutet und oftmals auch das Bereitstellen ausschließlich hierfür vorgesehener Vorrichtungen Vorrichtung und Verfahren zum Herstellen von Objekten aus einer erstarrenden Formmasse mit einer Schiebereinrichtung sind beispielsweise aus folgenden Druckschriften bekannt: FR 1 176 153 A, DE 10 2014 226335 A1, JP H08 336865 A. Die Patentanmeldung mit der Nummer FR 1 176 153 A offenbart ferner eine Vorrichtung gemäß dem Oberbegriff des Anspruchs 1.

Die Offenbarung stellt sich demnach der Aufgabe, den Nachbearbeitungsaufwand von Objekten zu reduzieren, die aus einer erstarrenden Formmasse hergestellt werden Diese Aufgabe wird gelöst durch die Vorrichtung mit den Merkmalen des Anspruchs 1 und das Verfahren gemäß Anspruch 15. Weiterbildungen der Erfindung sind Gegenstand der jeweiligen Unteransprüche.

Gemäß der vorliegenden Offenbarung wird eine Vorrichtung zum Herstellen von Objekten aus einer erstarrenden Formmasse bereitgestellt. Bei der erstarrenden Formmasse kann es sich um ein Kunststoffmaterial oder Kunststoffmaterialgemisch handeln. Die Formmasse kann in im Wesentlichen flüssiger Form zugeführt werden und anschließend zu einem insbesondere formsteifen Objekt bzw. Bauteil erstarren. Die Vorrichtung kann allgemein auf einem Spritzgussprinzip basieren oder dazu ausgebildet sein, ein Spritzgussverfahren oder ein zumindest Spritzguss-ähnliches Verfahren auszuführen. Insbesondere kann die Vorrichtung hierzu an bekannte Spritzeinheiten beziehungsweise Schneckenanordnungen einer Spritzgießmaschine anschließbar sein. Wie nachfolgend ausgeführt, kann es sich bei den Objekten um allgemein längliche Bauteile wie Profile, Kabel, Schläuche oder dergleichen handeln. Die Vorrichtung umfasst einen Zuführbereich mit wenigstens einer Angussstelle zum Zuführen der Formmasse. Der Zuführbereich kann, wie erwähnt, an eine Spritzeinheit einer Spritzgießmaschine anschließbar sein. Ferner kann der Zuführbereich Bestandteil einer Formanordnung der Vorrichtung sein. Gemäß einer Variante umfasst die Vorrichtung eine Formanordnung, umfassend zwei aufeinander zu bewegbare und voneinander abhhebbare Formhälften. Diese können in bekannter Weise an Aufspannplatten einer gewöhnlichen Spritzgießmaschine anordenbar sein oder derartige Aufspannplatten umfassen. In diesem Fall kann der Zuführbereich an oder in zumindest einer der Formhälften bereitgestellt sein. Die Formanordnung kann jedoch auch eine beliebige Mehrzahl von Formanteilen umfassen. Beispielsweise kann die Formanordnung drei- oder vierteilig aufgebaut sein. Im Folgenden kann der Begriff Formanteil, wenn nicht anders angegeben, entsprechende Formhälften einschließen (also lediglich zwei Formanteile), aber auch eine darüber hinausgehende Mehrzahl wie z.B. drei oder vier Formanteile.

Bei der Angussstelle kann es sich ferner um einen fluidleitenden Verbindungsbereich handeln, insbesondere in Form eines Kanals, einer Bohrung, einer Öffnung und/oder eines Hohlraumes. Die Angussstelle kann an den Austrittsbereich von Formmasse aus einer gewöhnlichen Spritzeinheit einer Spritzgießmaschine anschließbar sein und die Formmasse in einen nachfolgend erläuterten Formeinsatz leiten.

Die Vorrichtung umfasst ferner einen Formeinsatz, der zumindest anteilig eine Kavität begrenzt, in der die über die Angussstelle zugeführte Formmasse aufnehmbar ist. Der Formeinsatz kann mit etwaigen Formanteilen (z.B. Formhälften) und/oder Aufspannplatten der Vorrichtung wechselwirken und kann in diese verschieblich einsetzbar sein. Der Formeinsatz kann die Kavität vollständig oder zumindest teilweise begrenzen. Dabei kann die Kavität einen Hohlraum definieren sowie entsprechende den Hohlraum begrenzende Wandbereiche, welche Außen- bzw. Umfangsbereiche des herzustellenden Objektes formen. Hierzu können die Wandbereiche in bekannter Weise eine Form oder Kontur der erstarrenden Formmasse definieren.

Die Kavität umfasst wenigstens einen Objektformbereich, der das herzustellende Objekt formt, und wenigstens einen Verteilbereich, der dazu eingerichtet ist, zugeführte Formmasse zu dem Objektformbereich zu leiten. Bei dem Objektformbereich kann es sich um einen Bereich handeln, der Wandbereiche umfasst, die in der vorstehend genannten Weise die Form der erstarrenden Formmasse definieren und somit zumindest teilweise auch die Form des daraus hergestellten Objektes festlegen. Wie nachstehend erläutert, kann der Objektformbereich im Wesentlichen länglich sowie mit einem gleichbleibenden oder variierenden und insbesondere einem abschnittsweise rotationssymmetrischen Querschnitt ausgebildet sein. Beispielsweise kann der Objektformbereich einen länglichen und insbesondere rohrförmigen Hohlraum umfassen. Ferner kann der Formeinsatz zwei Formanteile umfassen (im Folgenden auch Einsatz-Formhälften genannt), die in zusammengesetzter Form den Objektformbereich begrenzen können, und die zur Entnahme eines darin geformten Objektes voneinander getrennt werden können. Analog zu den vorstehenden Ausführungen kann eine beliebige Mehrzahl von Formanteilen vorgesehen sein. Beispielsweise kann der Formeinsatz drei- oder vierteilig aufgebaut sein. Jeder Formanteil kann dabei die Kavität und/oder den Objektformbereich zumindest anteilig begrenzen. Im Folgenden kann der Begriff Einsatz-Formanteil, wenn nicht anders angegeben, entsprechende Einsatz-Formhälften einschließen (also lediglich zwei Einsatz-Formanteile), aber auch eine darüber hinausgehende Mehrzahl wie z.B. drei oder vier Einsatz-Formanteile.

Bei dem Verteilbereich kann es sich um einen Hohlraum handeln, der derart angeordnet ist, dass über die Angussstelle zugeführte und insbesondere eingespritzte Formmasse in den Objektformbereich geleitet werden kann. Demnach kann der Verteilbereich auch als Unterverteiler oder Angusskanalbereich bezeichnet werden. Der Verteilbereich kann ferner fluidleitend mit dem Objektformbereiches verbunden oder verbindbar sein. Beispielsweise können der Verteilbereich und der Objektformbereich (beziehungsweise die jeweils davon begrenzten Hohlräume) ineinander übergehen. Der Verteilbereich kann aus der Angussstelle im Wesentlichen unmittelbar Formmasse aufnehmen und/oder indirekt hiermit verbunden sein, zum Beispiel über einen Abschnitt des Objektformbereiches. Ferner kann ein Objektformbereich über eine Mehrzahl von Verteilbereichen mit Formmasse versorgt werden, was gleichzeitig oder aufeinanderfolgend erfolgen kann. Insgesamt kann somit Formmasse aus der Angussstelle über den Verteilbereich in den Objektformbereich gelangen, um diesen insbesondere kontinuierlich mit Formmasse aufzufüllen. Ferner kann die in dem Objektformbereich erstarrende Formmasse allgemein das Endprodukt bzw. das herzustellende Objekt definieren, während etwaige in dem Verteilbereich erstarrende Formmasse eine Angusskontur bilden kann, die an dem Endprodukt nicht erwünscht ist.

Die Vorrichtung umfasst ferner wenigstens eine Schiebereinrichtung, die in einer ersten Stellung dazu ausgebildet ist, eine Verbindung des Objektformbereiches und des Verteilbereiches zu ermöglichen, und in einer zweiten Stellung den Objektformbereich und den Verteilbereich voneinander zu trennen. Hierzu kann die Schiebereinrichtung dazu ausgebildet sein, in der zweiten Stellung in die Kavität und insbesondere in einen etwaigen Verbindungs- beziehungsweise Übergangsbereich zwischen dem Verteilbereich und dem Objektformbereich einzugreifen, oder, mit anderen Worten, sich dort hinein zu erstrecken. In der ersten Stellung kann die Schiebereinrichtung hingegen im Wesentlichen außerhalb der Kavität angeordnet sein und insbesondere außerhalb des etwaigen Verbindungs- beziehungsweise Übergangsbereiches zwischen Verteil- und Objektformbereich. Ferner kann die Schiebereinrichtung in der ersten Stellung eine fluidleitende Verbindung zwischen dem Objektformbereich und dem Verteilbereich ermöglichen, in der zweiten Stellung diese Verbindung jedoch zumindest teilweise unterbinden.

Die Schiebereinrichtung kann allgemein zwischen der ersten und zweiten Stellung bewegbar sein (und/oder umgekehrt). Dabei kann die Bewegung entlang einer Achse erfolgen, die in einem Winkel zu einer nachfolgend erläuterten Bewegungsachse des Formeinsatzes und/oder einer Längsachse der Kavität verläuft. Dies kann insbesondere im Wesentlichen quer oder in einem Winkel von ca. 90° zu den genannten Achsen erfolgen.

Die Schiebereinrichtung kann ferner dazu ausgebildet sein, eine bereits erstarrte oder noch flüssige Formmasse zwischen dem Verteilbereich und dem Objektformbereich zu durchtrennen. Dies kann bei einem Bewegen der Schiebereinrichtung von der ersten in die zweite Stellung erfolgen. Hierzu kann die Schiebereinrichtung einen Trenn- beziehungsweise Klingenbereich umfassen. Dieser kann einen der Kavität zugewandten und insbesondere darin hinein verlagerbaren Abschnitt der Schiebereinrichtung bilden. Allgemein kann die Schiebereinrichtung in dem Formeinsatz angeordnet sein und insbesondere in einem darin ausgebildeten Aufnahmebereich und/oder einer Ausnehmung. Ferner kann die Schiebereinrichtung im Wesentlichen in nur einem der etwaigen Einsatz-Formanteile des Formeinsatzes angeordnet sein.

Der Formeinsatz ist ferner entlang einer Bewegungsachse relativ zu dem Zuführbereich bewegbar. Hierzu kann der Formeinsatz zwischen etwaigen Formanteilen und insbesondere etwaigen Formhälften der Vorrichtung angeordnet und relativ zu diesen verschiebbar sein. Ferner können hierzu geeignete Führungsanordnungen, Führungsleisten, Gleitflächen, Schlittenanordnungen oder dergleichen innerhalb der Vorrichtung bereitgestellt sein. Die Relativbewegung kann im Wesentlichen geradlinig bzw. linear erfolgen. Im Fall von aufeinander zu bewegbaren und voneinander abhebbaren Formanteilen (bzw. Formhälften) kann die Bewegungsachse der Relativbewegung in einem Winkel zu der entsprechenden Schließ-/Öffnungsachse der Formhälften verlaufen, beispielsweise in einem Winkel zwischen ca. 45° und ca. 90° oder im Wesentlichen orthogonal hierzu.

Die Relativbewegung kann mit einer Änderung der Größe der Kavität einhergehen und insbesondere mit einer Verlängerung entlang der Bewegungsachse. Alternativ oder zusätzlich kann die Relativbewegung mit einer Änderung Relativpositionierung des Verteilbereiches und der Angussstelle einhergehen. Dies kann das erstmalige Herstellen und/oder Vergrößern einer fluidleitenden Verbindung zwischen dem Verteilbereich und der Angussstelle einschließen, wobei sich der Verteilbereich und die Angussstelle hierzu zum Beispiel im Wesentlichen gegenüberliegen können. Wie nachstehend erläutert, können auch mehrere Verteilbereiche vorgesehen sein, die im Rahmen der Relativbewegung aufeinanderfolgend in gewünschter Weise relativ zu der Angussstelle angeordnet werden können. Dies kann insbesondere derart erfolgen, dass nacheinander jeweils eine fluidleitende Verbindung zwischen einem der Verteilbereiche und der Angussstelle ermöglicht wird.

Ferner kann vorgesehen sein, dass zumindest über einen vorbestimmten Anteil der Relativbewegung eine insbesondere kontinuierliche Zufuhr von Formmasse über die Angussstelle erfolgt. Dies kann eine vorbestimmte Bewegungsstrecke oder Bewegungsdistanz einschließen, aber auch eine vorbestimmte Zeitdauer von zum Beispiel mehr als ca. 1 Sekunde, mehr als ca. 2 Sekunden oder mehr als ca. 3 Sekunden.

Die Schiebereinrichtung ist ferner nach Maßgabe der Relativbewegung betätigbar. Entsprechend kann vorgesehen sein, dass die Schiebereinrichtung eine gewünschte aus der ersten und zweiten Stellung nach Maßgabe der Relativbewegung einnimmt, beispielsweise in Abhängigkeit einer zurückgelegten Bewegungsstrecke, -distanz und/oder -dauer. Ebenso kann dies eine Betätigbarkeit bei Einnahme einer gewünschten Relativposition zwischen dem Formeinsatz und dem Zuführbereich einschließen und insbesondere zwischen dem Verteilbereich und der Angussstelle. Mit anderen Worten kann die Schiebereinrichtung zur Einnahme der ersten und/oder zweiten Stellung selektiv betätigbar sein, wobei die Betätigung allgemein von einem Parameter der Relativbewegung abhängen kann.

Gemäß einer Variante ist vorgesehen, dass die Schiebereinrichtung spätestens dann zur Einnahme der ersten Stellung eingerichtet ist, wenn der Formeinsatz derart bewegt wird, dass der Verteilbereich und die Angussstelle fluidleitend miteinander verbunden sind (zum Beispiel da diese sich im Wesentlichen gegenüberliegen). Vor dem Erreichen dieses Zustandes kann hingegen vorgesehen sein, dass die Schiebereinrichtung die zweite Stellung einnimmt, sodass die Schiebereinrichtung sozusagen selektiv geöffnet wird.

Alternativ oder zusätzlich kann vorgesehen sein, dass nach einer Bewegung des Formeinsatzes derart, dass eine fluidleitende Verbindung zwischen dem Verteilbereich und der Angussstelle wieder aufgehoben wird, die Schiebereinrichtung zur Einnahme der zweiten Position eingerichtet ist. Die Schiebereinrichtung kann demnach wieder selektiv geschlossen werden, wenn keine Formmasse mehr über den Verteilbereich zugeführt werden kann. Dies kann sich an die vorstehend genannte Einnahme der ersten Stellung zum Herstellen der fluidleitende Verbindung anschließen. Allgemein kann ferner vorgesehen sein, dass das Einnehmen der zweiten Stellung dann erfolgt, wenn die Formmasse in dem Verteilbereich noch nicht vollständig erstarrt ist.

Gemäß einer Weiterbildung ist der Objektformbereich dazu ausgebildet, ein im Wesentlichen längliches Objekt herzustellen, und die Bewegungsachse erstreckt sich im Wesentlichen parallel zu einer Längsachse des Objekts oder fällt mit dieser zusammen. Wie erwähnt, kann es sich bei dem Objekt um ein Kabel handeln, wobei die erstarrenden Formmasse eine Ummantelung des Kabels bilden kann. Die Ummantelung kann insbesondere innenliegende Leiter und/oder Adern des Kabels umgeben, welche vorab innerhalb der Kavität angeordnet werden und sich entlang des Objektformbereiches erstrecken können. Der Objektformbereich kann ferner variierende Querschnittsabmessungen aufweisen, um beispielsweise Stecker- oder Tüllenabschnitte des Kabels zu bilden.

Die Schiebereinrichtung kann ferner derart betätigbar sein, dass diese zumindest vorübergehend von der ersten in die zweiten Stellung wechselt oder umgekehrt. Beispielsweise kann die Schiebereinrichtung in einem Grundzustand in der ersten Stellung angeordnet sein und nach Maßgabe der Relativbewegung zumindest temporär in die zweite Stellung bewegbar sein. Ebenso kann die Schiebereinrichtung in einem Grundzustand in der zweiten Stellung angeordnet sein und nach Maßgabe der Relativbewegung zumindest temporär in die erste Stellung bewegbar sein. Dabei kann die Schiebereinrichtung jeweils auch in die Stellung gemäß ihrem Grundzustand zurückkehren, insbesondere wenn der Formmassen-Zuführvorgang über den zugeordneten Verteilbereich und/oder eine Erstarrung der Formmasse abgeschlossen ist.

Gemäß einem Beispiel ist die Schiebereinrichtung derart betätigbar, dass sie die zweite Stellung zumindest dann einnimmt, nachdem die Angussstelle dem Verteilbereich Formmasse zugeführt hat. Dies kann insbesondere einen Zeitpunkt betreffen, bei dem das Zuführen einer vorbestimmten Menge oder eines vorbestimmten Volumens von Formmasse in bzw. über den Verteilbereich beendet ist. Ferner kann dies zu einem Zeitpunkt erfolgen, in dem die Formmasse zumindest noch nicht vollständig erstarrt ist. Auch kann dies dann erfolgen, wenn der Verteilbereich im Rahmen der Relativbewegung von der Angussstelle wegbewegt wird, sodass beispielsweise keine fluidleitende Verbindung hierzu mehr besteht. Allgemein kann vorgesehen sein, dass die Schiebereinrichtung anschließend in der zweiten Stellung verbleibt, zum Beispiel bis das Herstellen des Objekts (beziehungsweise das Erstarren der Formmasse) vervollständigt ist.

Allgemein kann vorgesehen sein, dass die Schiebereinrichtung fluidisch, pneumatische und/oder elektrisch betätigbar ist. Alternativ oder zusätzlich kann aber vorgesehen sein, dass die Schiebereinrichtung mechanisch betätigbar ist, insbesondere aufgrund einer im Rahmen der Relativbewegung erzeugten Kraft. Beispielsweise kann im Rahmen der Relativbewegung eine Kraft erzeugt werden, die auf die Schiebereinrichtung derart einwirkt, dass diese aus ihrer aktuellen Stellung in die jeweils andere aus der ersten und zweiten Stellung bewegt wird. Diese Kraft kann beispielsweise durch einen Kontakt mit und/oder ein Abstützen der Schiebereinrichtung an einem Bereich der Vorrichtung erzeugt werden. Im Rahmen der Relativbewegung kann ein Aufbauen und/oder Verstärken eines solchen Kontakts bzw. Abstützens erfolgen.

Gemäß einer weiteren Variante umfasst die Schieberichtung einen Betätigungsabschnitt, der dazu ausgebildet ist, zumindest im Rahmen der Relativbewegung mit einem Betätigungsbereich der Vorrichtung zu wechselwirken, und insbesondere wobei das Wechselwirken ein zumindest temporäres Abstützen und/oder einen Eingriff zwischen dem Betätigungsbereich und dem Betätigungsabschnitt einschließt. Mit anderen Worten kann das Wechselwirken einen Kontakt zwischen und/oder ein zumindest mittelbares Abstützen von Betätigungsabschnitt und Betätigungsbereich einschließen. Der Betätigungsbereich kann von dem Zuführbereich umfasst oder daran angeordnet sein und sich allgemein im Rahmen der Relativbewegung relativ zu dem Betätigungsabschnitt bewegen. Beispielsweise kann der Betätigungsbereich an einer dem Formeinsatz zugewandten Fläche des Zuführbereiches ausgebildet oder angeordnet sein.

Zum Bereitstellen eines zumindest temporären Eingriffes kann einer von Betätigungsbereich und Betätigungsabschnitt einen konvexen und/oder vorspringenden Bereich umfassen, wobei, optional, der jeweils andere von Betätigungsbereich und Betätigungsabschnitt einen konkaven und/oder ein mit einer geeigneten Aussparung versehenen Bereich umfassen kann.

In diesem Zusammenhang kann das Wechselwirken eine Bewegung des Betätigungsabschnitts (und/oder der Schiebereinrichtung) einschließen bzw. eine solche Bewegung erzeugen, wobei die Bewegung in einem Winkel zu der Bewegungsachse und insbesondere im Wesentlichen orthogonal zu der Bewegungsachse erfolgen kann. Der Betätigungsabschnitt kann die Bewegung auf die Schiebereinrichtung und/oder zumindest auf einen Trenn- oder Klingenbereich hiervon übertragen, sodass dieser in die Kavität hinein verlagerbar ist. Die Schiebereineinrichtung und/oder deren Trennbereich können sich ebenfalls in einem Winkel zu der Bewegungsachse und insbesondere im Wesentlichen orthogonal hierzu bewegen. Ferner kann das Bewegen des Betätigungsabschnitts mit einem Wechsel zwischen der ersten und zweiten Stellung der Schiebereinrichtung einhergehen oder umgekehrt.

Der Betätigungsbereich kann ferner einen konturierten Steuerbereich umfassen, der dazu ausgebildet ist, mit dem Betätigungsabschnitt zu wechselwirken. Der Steuerbereich kann insbesondere derart mit dem Betätigungsabschnitt wechselwirken, dass eine vorbestimmte Bewegung oder Bewegungsabfolge des Betätigungsabschnittes und/oder der Schiebereinrichtung im Rahmen der Relativbewegung erzeugt wird. Auch in diesem Fall kann das Wechselwirken zumindest temporär einen unmittelbaren Kontakt und/oder ein zumindest mittelbares Abstützen zwischen Steuerbereich und Betätigungsabschnitt einschließen. Der Steuerbereich kann insbesondere eine konturierte Aussparung, Nut, Kante und/oder einen profilierten Oberflächenbereich umfassen. Ferner kann der Betätigungsabschnitt in den Steuerbereich eingreifen und/oder damit in Anlage gelangen und beispielsweise im Rahmen der Relativbewegung entlang des Steuerbereiches geführt werden.

Gemäß einer Variante umfasst der Steuerbereich eine Steuerkurve. Diese kann im Wesentlichen entlang der Bewegungsachse verlaufen und, optional, zumindest abschnittsweise auch in einem Winkel hierzu. Die Steuerkurve kann alternativ auch als Kulisse beziehungsweise Kulissenführung bezeichnet werden oder Bestandteil einer solchen Kulisse oder Kulissenführung sein.

Ferner kann die Steuerkurve allgemein nicht-auslenkende Abschnitte umfassen, die sich beispielsweise im Wesentlichen entlang der Bewegungsachse erstrecken können, sowie auslenkende Abschnitte, die sich in einem Winkel zu der Bewegungsachse erstrecken können. Im Rahmen der Relativbewegung kann der Betätigungsabschnitt dabei sowohl mit den nicht-auslenkenden wie auch mit den auslenkenden Abschnitten wechselwirken, um eine gewünschte Bewegung oder Bewegungsabfolge zu erzielen. Zum Beispiel kann der Betätigungsabschnitt bei einem Wechselwirken mit den nicht-auslenkenden Abschnitten eine Grundstellung einnehmen und beim Erreichen der auslenkenden Abschnitte aus der Grundstellung bewegt werden. Insbesondere kann vorgesehen sein, dass der Betätigungsabschnitt beim Erreichen der auslenkenden Abschnitte derart bewegt wird, dass die Schiebereinrichtung von der ersten in die zweiten Stellung wechselt oder umgekehrt.

Gemäß einem weiteren Aspekt ist die Schiebereinrichtung in eine von der ersten Stellung und der zweiten Stellung vorgespannt und, optional, in die jeweils andere Stellung nach Maßgabe der Relativbewegung bewegbar. Das Vorspannen kann mithilfe einer geeigneten Vorspannungseinrichtung erfolgen, beispielsweise eines fluidischen oder pneumatischen Vordruckes oder eines mechanischen Federelements. Die Vorspannkraft kann derart bemessen sein, dass die im Rahmen der Relativbewegung erzeugten und/oder einwirkenden Kräfte die Vorspannkraft gezielt überwinden können, um die Schiebereinrichtung in die jeweils andere (nicht-vorgespannte) Stellung zu bewegen.

Gemäß einer Weiterbildung ist der Objektformbereich dazu ausgebildet, das Objekt entlang wenigstens der Hälfte von dessen Länge zu formen und insbesondere im Wesentlichen entlang dessen gesamter Länge zu formen. Der Objektformbereich kann zumindest teilweise und, optional, größtenteils oder im Wesentlichen vollständig in dem Formeinsatz gebildet sein. Beispielsweise kann der Objektformbereich von etwaigen Einsatz-Formanteilen des Formeinsatzes begrenzt werden. Somit kann der Formeinsatz beziehungsweise der davon begrenzte Objektformbereich das Objekt entlang dessen gesamter Länge oder zumindest entlang einem überwiegenden Anteil von dessen Länge formen. Dies kann über die vorstehend genannten Wandbereiche des Objektformbereiches erfolgen, welche die Form von Außenbereichen und/oder Umfangsbereich des Objektes festlegen können.

Der Zuführbereich kann ferner in einem im Wesentlichen feststehenden Abschnitt entlang der Bewegungsachse ausgebildet sein. Mit anderen Worten kann vorgesehen sein, dass der Zuführbereich entlang der Bewegungsachse betrachtet eine im Wesentlichen unveränderliche Position einnimmt. Hingegen kann sich der Zuführbereich quer zu der Bewegungsachse bewegen, beispielsweise wenn dieser an aufeinander zu und voneinander weg bewegbaren Formanteilen der Vorrichtung angeordnet ist. Gemäß dieser Variante erfolgt die Relativbewegung somit im Wesentlichen durch ein Bewegen beziehungsweise Linearverschieben das Formeinsatzes relativ zu dem (zumindest entlang der Bewegungsachse betrachtet) im Wesentlichen feststehenden Zuführbereich.

Erfindungsgemäß umfasst die Vorrichtung mehrere Verteilbereiche mit jeweils einer Schiebereinrichtung, insbesondere wobei die Verteilbereiche entlang der Bewegungsachse aneinandergereiht und jeweils im Rahmen der Relativbewegung betätigbar sind. Beispielsweise kann vorgesehen sein, dass die Verteilbereiche entlang einer gemeinsamen Linie aneinandergereiht sind, die (optional) parallel zu der Bewegungsachse oder einer Objektlängsachse verläuft. Die Verteilbereiche können ferner in regelmäßigen Intervallen aneinandergereiht beziehungsweise voneinander beabstandet sein. Die Schiebereinrichtungen (oder zumindest etwaige Trenn- oder Klingenbereiche hiervon) können ferner im Wesentlichen in einer gemeinsamen Ebene angeordnet sein, beziehungsweise auf einem gemeinsamen Höhenniveau relativ zu der Bewegungsachse. Ebenso können die Positionen der Schiebeinrichtung (oder zumindest etwaiger Trenn- oder Klingenbereiche hiervon) aber an zugeordnete Querschnittsabmessungen das Objektformbereichs angepasst sein, insbesondere an variierende Querschnitts- und/oder Durchmesserabmessungen hiervon. Dies kann ein Anordnen auf verschiedenen Ebenen bzw. Höhenniveaus einschließen.

Allgemein kann der Formeinsatz zwei Einsatz-Formhälften umfassen, die entlang einer Trennungsebene zusammensetzbar sind, und der eine oder die mehreren Verteilbereiche erstrecken sich zumindest teilweise in der Teilungsebene. Ebenso kann der Formeinsatz mehrere Einsatz-Formanteile umfassen, von denen wenigstens zwei in der vorstehenden genannten Trennungsebene zusammensetzbar sind. Im Fall einer Mehrzahl von Verteilbereichen können diese entlang der Teilungsebene aneinandergereiht sein oder, anders ausgedrückt, entlang einer gemeinsamen Linie aneinandergereiht sein, die innerhalb oder parallel zu der Teilungsebene verläuft.

Im Rahmen der Relativbewegung kann somit vorgesehen sein, dass der Angussbereich nacheinander mit den jeweiligen Verteilbereichen fluitleitend verbunden wird und dem Objektformbereich Formmasse zuführt, sodass dieser sukzessive aufgefüllt wird. Dabei kann auch ein aufeinanderfolgendes Wechselwirken mit den jeweiligen Schiebereinrichtungen beziehungsweise deren Betätigungsabschnitten erfolgen, um diese in gewünschter Weise zu betätigen. Beispielsweise kann der Angussbereich über einen vorstehend erläuterten Steuerbereich mit den jeweiligen Betätigungsabschnitten der Schiebereinrichtungen wechselwirken und insbesondere diese nacheinander (und/oder zumindest teilweise gleichzeitig) in vorbestimmter Weise bewegen. Hierdurch können zu vorbestimmten Zeitpunkten und/oder bei vorbestimmten Relativbewegungszuständen die Schiebereinrichtungen in eine gewünschte Stellung versetzt werden, insbesondere in Abhängigkeit davon, welcher Verteilbereich sich aktuell nahe der Angussstelle befindet oder auf diese zu oder von dieser weg bewegt wird.

Ferner kann vorgesehen sein, dass die Vorrichtung dazu ausgebildet ist, zumindest eine aus der Mehrzahl von Schiebereinrichtungen in die erste Stellung zu versetzen, wobei diese Schiebereinrichtung einem Verteilbereich zugeordnet ist, durch den eine Formmasse unmittelbar zugeführt werden soll, und wobei wenigstens eine weitere Schiebereinrichtung die zweite Stellung einnimmt oder in diese versetzt wird. Insbesondere kann vorgesehen sein, dass entlang der Bewegungsachse betrachtet eine Schiebereinrichtung, die auf die in die erste Stellung versetzte Schiebereinrichtung unmittelbar folgt oder dieser unmittelbar vorausgeht, die zweite Stellung einnimmt oder in diese versetzt wird. Dies kann verhindern, dass nicht-erstarrte Formmasse über die diesen weiteren Schiebereinrichtungen jeweils zugeordneten Verteilbereiche aus dem Objektformbereich austritt, wenn weitere Formmasse zugeführt wird.

In einer Variante ist die Vorrichtung dazu ausgebildet, im Rahmen der Relativbewegung nur jeweils eine aus der Mehrzahl von Schiebereinrichtungen vollständig in die erste Stellung zu versetzen, wohingegen die verbleibenden Schiebereinrichtungen die zweite Stellung einnehmen. Man beachte, dass jedoch auch mehrere Angussstellen vorgesehen sein können und nur jeweils diejenigen Schiebereinrichtungen vollständig in die erste Stellung versetzbar sein können, die einem Verteilbereich zugeordnet sind, über den mittels einer der Angussstellen aktuell Formmasse zugeführt werden soll.

Eine Weiterbildung sieht vor, dass die Schiebereinrichtung in einem dem Objektformbereich zugewandten Bereich korrespondierend zu einem angrenzenden Abschnitt des Objektformbereiches geformt ist. Dies kann insbesondere zumindest bei Einnahme der zweiten Stellung unmittelbar in die Kavität hineinreichende Bereiche der Schiebereinrichtung betreffen, wie beispielsweise einen etwaigen Trenn- oder Klingenbereich. Ferner kann der zugewandte Bereich der Schiebereinrichtung zumindest bei Einnahme der zweiten Stellung den Objektformbereich zumindest teilweise begrenzen und/oder darin eingreifen. Entsprechend kann der zugewandte Bereich der Schiebereinrichtung auch eine Außenform beziehungsweise einen Umfangsbereich des herzustellenden Objektes zumindest teilweise festlegen.

Bei dem angrenzenden Abschnitt des Objektformbereiches kann es sich insbesondere um einen angrenzenden (bzw. umgebenden) Wandbereich handeln, der, wie vorstehend erläutert, die Form eines Außenbereiches des herzustellenden Objektes festlegen kann. Beispielsweise kann der angrenzende Abschnitt bzw. Wandbereich gewölbt sein und die Schiebereinrichtung kann mit einer entsprechend korrespondierenden Wölbung ausgebildet sein. Insbesondere in dem Fall, in dem die Schiebereinrichtung bei Vorliegen von zumindest teilweise noch nicht-erstarrter Formmasse bereits die zweite Stellung einnimmt, kann somit sichergestellt werden, dass eine gewünschte Form des herzustellenden Objektes auch einem nach Abtrennen von dem Verteilbereich erreicht wird.

Die Offenbarung betrifft ferner ein Verfahren zum Herstellen von Objekten aus einer erstarrenden Formmasse mithilfe einer Vorrichtung, wobei die Vorrichtung einen Zuführbereich mit wenigstens einer Angussstelle zum Zuführen der Formmasse umfasst, und einen Formeinsatz, der zumindest anteilig eine Kavität begrenzt, in der die über die Angussstelle zugeführte Formmasse aufnehmbar ist, wobei die Kavität wenigstens einen Objektformbereich umfasst, der das herzustellende Objekt formt, und wenigstens einen Verteilbereich, der dazu eingerichtet ist, zugeführte Formmasse zu dem Objektformbereich zu leiten, und ferner wenigstens eine Schiebereinrichtung umfasst, die in einer ersten Stellung dazu ausgebildet ist, eine Verbindung des Objektformbereiches und des Verteilbereiches zu ermöglichen und in einer zweiten Stellung den Objektformbereich und den Verteilbereich voneinander zu trennen, und wobei die Vorrichtung mehrere Verteilbereiche mit jeweils einer Schiebereinrichtung umfasst.

Dabei umfasst das Verfahren die folgenden Schritte:
- Bewegen des Formeinsatzes entlang einer Bewegungsachse relativ zu dem Zuführbereich, und
- Betätigen der Schiebereinrichtung nach Maßgabe der Relativbewegung.

Es versteht sich, dass das Verfahren weitere Schritte umfassen kann, um jegliche der vorstehend genannten Effekte, Arbeitsschritte und/oder Betriebszustände der Vorrichtung zu realisieren. Gleiches gilt für die nachfolgend erläuterten Aspekte der Ausführungsbeispiele.

Beispielsweise können zusätzliche Schritte des in Eingriff Bringens von einem Steuerbereich des Zuführbereiches und einem Betätigungsabschnitt der Schiebereinrichtung und/oder das Bewegens eines solchen Betätigungsabschnittes gemäß den vorstehend genannten Aspekten vorgesehen sein. Ebenso kann dies Schritte des Bewegens oder Realisierens einer Bewegungsabfolge der Schiebereinrichtung zwischen der ersten und zweiten Stellung gemäß einer der vorstehend und/oder nachstehend diskutierten Varianten einschließen.

Die vorliegende Offenbarung soll weiter anhand von Figuren erläutert werden. Diese Figuren zeigen schematisch:
- Figur 1: eine Teilschnittansicht einer Vorrichtung gemäß einem ersten Ausführungsbeispiel;
- Figur 2: eine weitere Teilschnittansicht des ersten Ausführungsbeispiels, insbesondere um eine Steuerkurve zu erläutern;
- Figur 3: eine weitere Teilschnittansicht des ersten Ausführungsbeispiels, insbesondere um verschiedene Stellungen der Schiebereinrichtungen zu erläutern;
- Figur 4: ein Diagramm zum Erläutern der Stellungen der Schiebereinrichtungen im Rahmen einer Relativbewegung gemäß dem ersten Ausführungsbeispiel; und
- Figur 5: Teilansichten eines Trennabschnittes einer Schiebereinrichtung gemäß dem ersten Ausführungsbeispiel bei Einnahme einer ersten sowie einer zweiten Stellung.

Im Folgenden werden, ohne hierauf beschränkt zu sein, spezifische Details dargelegt, um ein vollständiges Verständnis der vorliegenden Offenbarung zu liefern. Es ist einem Fachmann jedoch klar, dass die vorliegende Offenbarung in anderen Ausführungsbeispielen verwendet werden kann, die von den nachfolgend dargelegten Details abweichen können. Beispielsweise werden im Folgenden spezifische Konfigurationen und Ausgestaltungen einer Vorrichtung und eines Verfahrens beschrieben, die nicht als einschränkend anzusehen sind. Ferner sind verschiedene Anwendungsgebiete der Vorrichtung denkbar. Rein beispielhaft seien an dieser Stelle das Herstellen Kabeln, Schläuchen oder langgestreckten Kunststoffprofilen genannt.

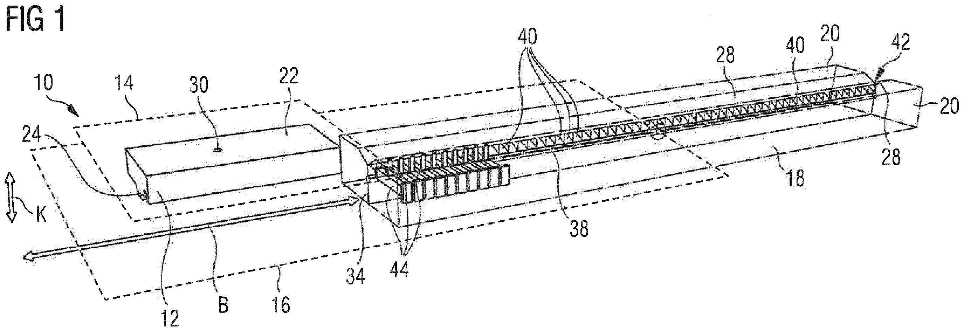

Figur 1 zeigt eine schematische Teilschnittansicht einer Vorrichtung 10 gemäß einem ersten Ausführungsbeispiel. Die Vorrichtung 10 umfasst einen Zuführbereich 12, der an einer lediglich schematisch angedeuteten oberen Formhälfte 14 angeordnet ist. Ferner umfasst die Vorrichtung 10 eine schematisch angedeutete untere Formhälfte 16, die der oberen Formhälfte 14 gegenüberliegt. Die obere Formhälfte 14 ist in bekannter Weise an einer nicht dargestellten feststehenden Aufspannplatte einer Spritzgießmaschine angeordnet, während die untere Formhälfte 16 an einer ebenfalls nicht dargestellten bewegbaren Aufspannplatte angeordnet ist. Somit sind die obere und untere Formhälfte 14, 16 gemäß entlang der Achse K in bekannter Weise aufeinander zu und voneinander weg bewegbar. Man beachte, dass die Formhälften 14,16 auch gleich groß ausgebildet sein können, insbesondere hinsichtlich ihrer jeweiligen zueinander parallelen Grundflächen. In Figur 1 sind diese jedoch aus Darstellungsgründen mit voneinander abweichenden Abmessungen abgebildet. Auch kann die Vorrichtung 10 mehr Formanteile als die gezeigten Formhälften 14,16 umfassen.

Die Vorrichtung 10 umfasst ferner einen Formeinsatz 18, der aus zwei Einsatz-Formhälften 20 zusammengesetzt ist. Auch in diesem Fall kann der Formeinsatz 18 aber mehr als Formanteile als die gezeigten Einsatz-Formhälften 20 umfassen, wie zum Beispiel drei oder vier Formanteile. Der Formeinsatz 18 ist über nicht gesondert dargestellte Führungsleisten an der unteren Formhälfte 16 entlang einer Bewegungsachse B linear bewegbar und somit relativ zu dem Zuführbereich 12 verschiebbar. Der Zuführbereich 12 ist hingegen entlang der Bewegungsachse B betrachtet allgemein feststehend ausgebildet. Eine Bewegung des Formeinsatzes 18 zum Herstellen eines Objekts erfolgt dabei in Figur 1 entlang der Bewegungsachse B nach rechts. Man beachte, dass die Bewegungsachse B orthogonal zu der Öffnungs-/Schließachse K der Formhälften 14, 16 verläuft.

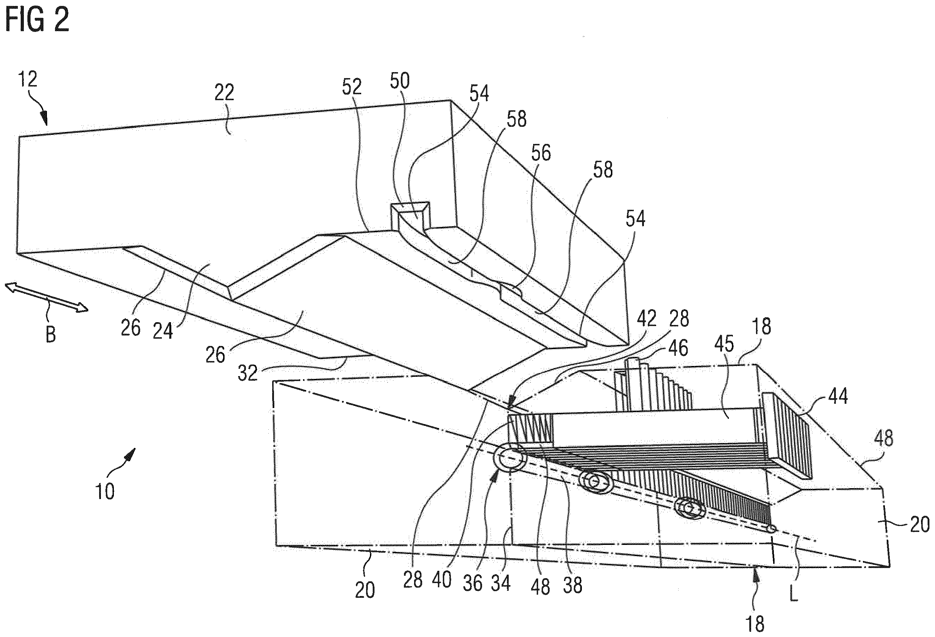

Im vorliegenden Fall umfasst der Zuführbereich 12 einen blockförmigen Grundkörper 22 mit einem in Richtung des Formeinsatzes 18 vorspringenden und sich entlang der Bewegungsachse B erstreckenden Führungsbereich 24. Wie sich ferner unter Berücksichtigung von Figur 2 ergibt, umfasst der Führungsbereich 24 zwei Führungsflächen 26, die mit Anlageflächen 28 des Formeinsatzes 20 in Anlage bringbar sind. Sämtliche Führungsflächen 26 und Anlageflächen 28 erstrecken sich dabei entlang der Bewegungsachse B. Die Führungsflächen 26 und Anlageflächen 28 sind derart zu den Formhälften 14,16 angewinkelt, dass diese gemeinsam eine Linearführung mit V-förmiger Querschnitts- beziehungsweise Eingriffsstruktur bilden. Dies kann auch als Prismenführung oder V-Prismenführung bezeichnet werden.

In Figur 1 erkennt man ferner, dass der Grundkörper 22 des Zuführbereichs 12 eine Zuführöffnung 30 umfasst, in die über eine nicht dargestellte Spritzeinheit einer herkömmlichen Spritzgießmaschine eine erstarrenden Formmasse in noch flüssiger beziehungsweise zähflüssiger Form eingespritzt werden kann. Aus Figur 2 ergibt sich, dass gegenüberliegend zu der Zuführöffnung 30 eine Angussstelle 32 ausgebildet ist, durch die die erstarrenden Formmasse dem Formeinsatz 20 zugeführt werden kann.

Die Zuführöffnung 30 und die Angussstelle 32 sind dabei durch einen geradlinigen durchgängigen Kanal verbunden.

Aus den Figuren 1 und 2 erkennt man in Zusammenschau ferner, dass die Einsatz-Formhälften 20 des Formeinsatzes 18 entlang einer gemeinsamen Teilungsebene 34 zusammengesetzt sind und entlang dieser Teilungsebene 34 durch nicht dargestellte Zylindereinheiten aneinandergepresst werden. Dabei begrenzen sie jeweils anteilig eine Kavität 36, in der die erstarrenden Formmasse in dem Formeinsatz 20 aufnehmenbar ist. Die Kavität 36 definiert dabei einen Hohlraum, der (Innen-) Wandbereiche aufweist, die eine Form der erstarrenden Formmasse definieren. Konkret umfasst die Kavität 36 einen Objektformbereich 38 und mehrere Verteilbereiche 40, die entlang der Bewegungsachse B aneinandergereiht sind. Aus Gründen der Übersichtlichkeit sind in den Figuren 1-3 nur ausgewählte Verteilbereiche 40 mit einem entsprechenden Bezugszeichen versehen.

Der Objektformbereich 38 ist allgemein langgestreckt sowie rohrförmig ausgebildet und weist einen kreisrundartigen Querschnitt auf, dessen Querschnittsabmessungen entlang der Bewegungsachse B variieren. Entsprechend definiert der Objektformbereich 38 eine Objektlängsachse L, die sich entlang und durch den rohrförmigen Objektformbereich 38 erstreckt, wie in Figur 2 angedeutet. Die Objektlängsachse L fällt dabei mit der Bewegungsachse B des Formeinsatzes 18 zusammen.

Der Objektformbereich 38 umfasst ferner (Innen-) Wandbereiche, die die Form der erstarrenden Formmasse und somit eine Außen- bzw. Umfangsform des herzustellenden Objektes festlegen. Im gezeigten Fall handelt es sich bei dem herzustellende Objekt um ein Kabel, dessen nicht gesondert dargestellte Leiter vorab derart angeordnet sind, dass sie sich durch den Objektformbereich 38 hindurch und entlang der Bewegungsachse B erstrecken. Die erstarrenden Formmasse umfasst ein Kunststoffmaterial, das sich um die Leiter des Kabels innerhalb des Objektformbereiches 38 abgelagert und diese somit umschließt und ummantelt.

Die Verteilbereiche 40 erstrecken sich im Wesentlichen senkrecht zu der Bewegungsachse B und Objektlängsachse L und verbinden dabei den Objektformbereich 38 mit einem Übergangsbereich 42 zwischen den beiden Führungsflächen 28 des Formeinsatzes 18. Da, wie in Figur 2 gezeigt, die Angussstelle 32 diesem Übergangsbereich 42 unmittelbar gegenüberliegt beziehungsweise damit in Anlage bringbar ist, kann über die Angussstelle 32 eingespritzte Formmasse in einen der Angussstelle 32 jeweils aktuell gegenüberliegenden Verteilbereich 40 gelangen und somit dem Objektformbereich 38 zugeführt werden. Mit anderen Worten ist im Rahmen der Relativbewegung jeweils ein Verteilbereich 40 mit der Angussstelle 32 fluidleitend verbindbar.

Ferner erkennt man aus den Figuren 1 und 2, dass die Verteilbereiche 40 entlang der Bewegungsachse B sowie der Objektlängsachse L in regelmäßigen Abständen zueinander aneinandergereiht sind. Im Rahmen der Relativbewegung des Formeinsatzes 18 zu dem Zuführbereich 12 gelangt die Angussstelle 32 somit sukzessive in Anlage beziehungsweise in eine unmittelbar gegenüberliegende Position zu den einzelnen Verteilbereichen 40 und kann somit insbesondere bei einer kontinuierlich erfolgenden Zufuhr von Formmasse nacheinander jedem der Verteilbereiche 40 ein entsprechendes Formmassevolumen zuführen. Somit kann der Objektformbereich 38 sukzessive über die einzelnen Verteilbereiche 40 mit Formmasse ausgefüllt werden, sodass sich das darin gebildete Objekt (bzw. die hierfür im Objektformbereich 38 aufgenommene Formmasse) sozusagen kontinuierlich verlängert.

In den Figuren 1-3 sind ferner Schiebereinrichtungen 44 gezeigt, die in einer der Einsatz-Formhälften 20 des Formeinsatzes 18 angeordnet sind. Man beachte, dass nur einzelne Schiebereinrichtungen 44 dargestellt sind und nur ausgewählte von diesen Schiebeeinrichtungen 44 mit entsprechenden Bezugszeichen versehen sind. Prinzipiell ist jedoch jedem der Verteilbereiche 40 eine eigene Schiebereinrichtung 44 zugeordnet. Ferner ist zu betonen, dass insbesondere der Formeinsatz 18 in den Figuren 1-3 in Teilschnittansicht beziehungsweise teiltransparenter Darstellung gezeigt ist. Dies dient dazu, die jeweils in einzelnen von außen nicht einsehbaren Ausnehmungen innerhalb des Formeinsatzes 18 aufgenommenen Schiebereinrichtungen 44 näher zu erläutern.

In Figur 2 erkennt man, dass die Schiebereinrichtungen 44 jeweils einen blockförmigen Grundkörper 45 umfassen, der sich im Wesentlichen quer zu der Teilungsebene 34 des Formeinsatzes 18 erstreckt sowie quer zu der Bewegungsachse B und Objektlängsachse L. Ferner erstreckt sich ein zylindrischer und stiftförmiger Betätigungsabschnitt 46 im Wesentlichen senkrecht zu dem jeweiligen Grundkörper 45 und steht dabei über eine dem Zuführbereich 12 zugewandte Oberseite 48 des Formeinsatzes 18 hervor. Schließlich umfassen die Schiebereinrichtungen 44 jeweils einen dünnwandigen vorspringenden Trennbereich 48, der, wie nachfolgend erläutert, dazu ausgebildet ist, sich selektiv in die Kavität 36 hinein zu erstrecken.

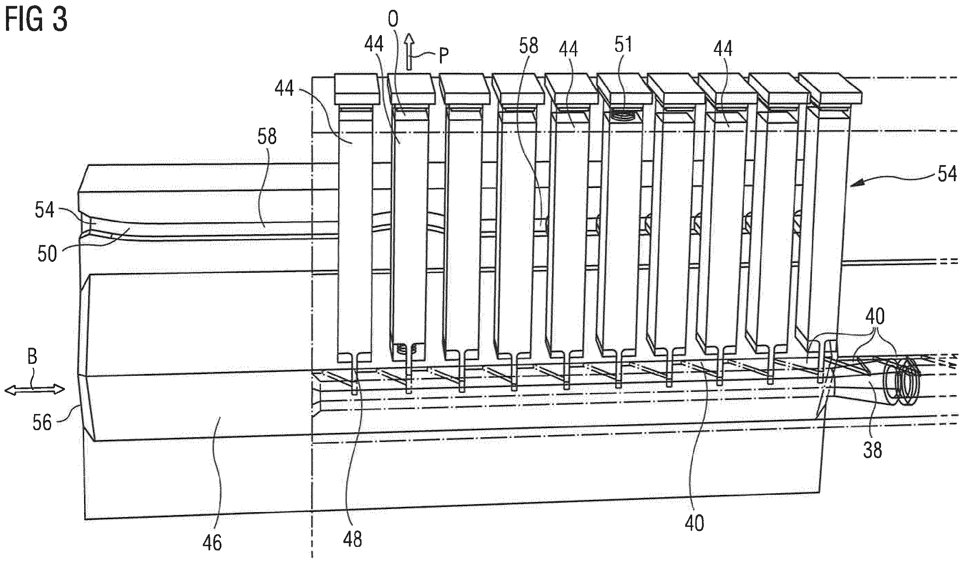

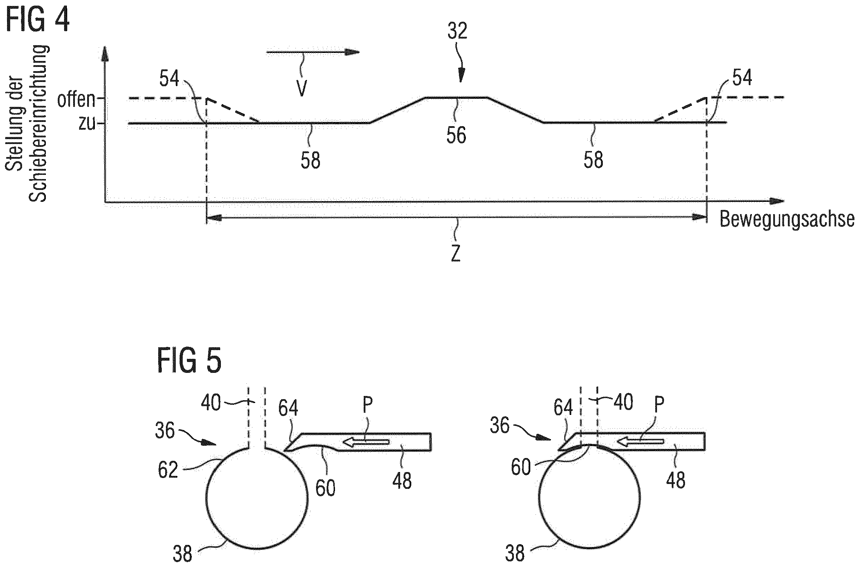

Die möglichen Stellungen der Schiebereinrichtungen 44 verdeutlichen sich aus den Figuren 3 und 5. Zunächst bezugnehmend auf Figur 5 erkennt man im linken Fall eine Querschnittsdarstellung des Objektformbereiches 38 sowie das darin mündenden Verteilbereiches 40. Die Schiebereinrichtung 44 und insbesondere deren Trennbereich 48 ist hingegen innerhalb der die Schiebereinrichtung 44 aufnehmenden Ausnehmung in der entsprechenden Einsatz-Formhälfte 20 angeordnet und ragt somit nicht in die Kavität 36 des Formeinsatzes 18 hinein. In diesem Fall sind der Verteilbereich 40 und der Objektformbereich 38 fluidleitend miteinander verbunden, sodass die noch flüssige Formmasse aus der Angussstelle 32 des Zuführbereiches 12 direkt in den Objektformbereich 38 gelangen kann. Dies entspricht einer ersten Stellung beziehungsweise einer offenen Stellung der Schiebereinrichtung 44.

Hingegen ist im in Figur 5 rechten Fall der Trennbereich 48 in die Kavität 36 hinein verlagert. Dabei trennt er den Verteilbereich 40 und den Objektformbereich 38 derart voneinander ab, dass keine fluidleitende Verbindung zwischen diesen Bereichen mehr möglich ist. Dies entspricht einer zweiten beziehungsweise geschlossenen Stellung der Schiebereinrichtung 44.

Ein Wechsel des Trennbereiches 48 von der ersten in die zweite Stellung erfolgt dabei entlang eines Pfeils P, der quer zu der Teilungsebene 34 sowie zu der Bewegungsachse B verläuft. Ferner ist die Schiebereinrichtung 44 weitestgehend starr ausgebildet, sodass deren Grundkörper 45, Betätigungsabschnitt 46 sowie Trennbereich 48 gemeinsam gemäß dem Pfeil P verlagert werden.

Mit Bezug auf Figur 3 befindet sich beispielsweise die als zweite von rechts dargestellte Schiebereinrichtung 44, die zusätzlich mit dem Bezugszeichen O versehen ist, in der ersten geöffneten Stellung. Sämtliche weitere Schiebereinrichtung 44 entlang der gesamten Länge des Objektformbereiches 38 befinden sich hingegen in der geschlossenen zweiten Stellung. Man beachte, dass die Schiebereinrichtungen 44 jeweils in diese geschlossene zweite Stellung über ein Spiralfederelement 51 vorgespannt sind, wobei ein solches Spiralfederelement 51 in Figur 3 nur für eine einzelne Schiebereinrichtung 44 schematisch dargestellt ist. Wie nachfolgend erläutert, werden die Schiebereinrichtungen 44 demnach nach Maßgabe der Bewegung des Formeinsatzes 18 nur selektiv geöffnet und in die erste Stellung versetzt, und zwar nur dann, wenn die den Schiebereinrichtungen 44 jeweils zugeordneten Verteilbereiche 40 fluidleitend mit der Angussstelle 32 verbunden sind beziehungsweise dieser gegenüberliegen.

In Figur 2 erkennt man ferner, dass der Zuführbereich 12 eine Steuerkurve bzw. Kulisse 50 aufweist, die an einer dem Formeinsatz 18 zugewandten Unterseite 52 des Grundkörpers 22 des Zuführbereichs 12 ausgebildet ist. Somit ist die Steuerkurve 50 allgemein benachbart zu einer der Führungsflächen 26 des Zuführbereichs 12 angeordnet. Die Steuerkurve 50 bildet einen konturierten Steuerbereich des Zuführbereiches 12, um die nachfolgend erläuterten Bewegungen der Schiebereinrichtungen 44 zu realisieren.

Zunächst erkennt man, dass die Steuerkurve 50 als allgemein langgestreckte Nut ausgebildet ist, die sich im Wesentlichen entlang der Bewegungsachse B beziehungsweise der Objektlängsachse L erstreckt. In ihren jeweiligen (axialen) Endbereich 54 ist die Steuerkurve dabei leicht aufgeweitet und gekrümmt sowie mit gerundeten Kanten ausgebildet. Dies soll das in Eingriff Gelangen mit den Betätigungsabschnitten 46 der Schiebereinrichtungen 44 erleichtern. Ferner umfasst die Steuerkurve 50 einen mittigen und gegenüber der Bewegungsachse B teilweise angewinkelten Bereich 56. Dieser geht beidseitig in sich entlang der Bewegungsachse B geradlinig erstreckende Bereiche 58 der Steuerkurve 50 über, die jeweils in die Endbereich 54 münden.

Der angewinkelte Bereich 56 bildet einen allgemein konvexen oder ausbauchenden Abschnitt der Steuerkurve 50. Dieser ist ferner derart bemessen, dass sich nur einer der Betätigungsabschnitte 46 der Schiebereinrichtungen 44 gleichzeitig darin befinden kann, während die weiteren Betätigungsabschnitte 46 sich in den übrigen Bereichen der Steuerkurve befinden oder gänzlich außerhalb davon.

Wie sich ferner aus Figur 3 ergibt, befinden sich die Schiebereinrichtungen 44 in ihrer geschlossenen zweiten Stellung, solange deren Betätigungsabschnitte 46 mit den geradlinigen Bereichen 58 der Steuerkurve 50 in Eingriff stehen. Wie erläutert, gilt gleiches auch für gänzlich außerhalb der Steuerkurve 50 angeordnete Schiebereinrichtungen 44. Die geradlinigen Bereiche 58 bilden somit nicht-auslenkende Abschnitte der Steuerkurve 50, bei denen keine gezielten Kräfte auf die damit in Eingriff stehenden Betätigungsabschnitte 46 ausgeübt werden, geschweige denn Bewegungskräfte, um die Betätigungsabschnitte 46 und zugehörigen Schiebereinrichtungen 44 gezielt zu bewegen.

Gerät der Betätigungsabschnitt 46 einer Schiebereinrichtung 44 hingegen in Eingriff mit dem angewinkelten Bereich 56 der Steuerkurve 50, wird darauf eine gezielte Bewegungskraft ausgeübt, die gemäß dem Pfeil P in den Figuren 3 und 5 im Wesentlichen quer zu der Teilungsebene 34 sowie der Bewegungsachse B wirkt. Dabei ist diese Bewegungskraft von der Teilungsebene 34 und dem Objektformbereich 38 weg gerichtet, sodass die entsprechende Schiebereinrichtung 44 in die geöffnete erste Stellung versetzt und deren Trennbereich 48 aus der Kavität 36 hinaus bewegt wird. Da der angewinkelten Bereich 36 in einer gemeinsamen Querschnittsebene mit der Angussstelle 32 ausgebildet ist, wobei die Querschnittsebene senkrecht auf der Bewegungsachse B steht, wird nur jeweils diejenige Schiebereinrichtung 44 in die geöffnete erste Stellung versetzt, deren zugehöriger Verteilbereich 40 der Angussstelle 32 unmittelbar gegenüberliegt und fluidleitend damit in Verbindung steht. Somit kann selektiv nur diejenige Schiebereinrichtung 44 betätigt werden, über die bzw. entlang welcher aktuell ein Formmassenvolumen dem Objektformbereich 38 zugeführt werden soll (siehe Schiebereinrichtung O in Figur 3). Sobald der Betätigungsabschnitt 46 hingegen wieder den geradlinigen Bereich 58 der Steuerkurve 50 erreicht, nimmt die entsprechende Schiebereinrichtung 44 wieder ihre geschlossene zweite Stellung ein.

Dies verdeutlicht sich ferner aus dem Diagramm von Figur 4, dass die Stellungen der Schiebereinrichtungen 44 entlang der Bewegungsachse B zeigt. Dabei sind auf der Ordinate die Stellungen der Schiebereinrichtungen 44 zwischen "offen" (erste Stellung) und "zu" (zweite Stellung) eingetragen, wobei die Abszisse Positionen entlang der Bewegungsachse B betrifft. Als Bereich Z entlang der Bewegungsachse ist dabei ein Bereich von Schiebereinrichtungen 44 gezeigt, die von dem Zuführbereich 12 überspannt werden und die mit der Steuerkurve 50 aktuell in Eingriff stehen. Ein Pfeil V entspricht ferner einer Bewegungsrichtung des Zuführbereiches 12 relativ zu dem Formeinsatz 18. Ein weiterer vertikaler Pfeil stellt die über die Angussstelle 32 zugeführte Formmasse da.

Von links nach rechts entlang der Bewegungsachse betrachtet erkennt man in Figur 4 einen ersten Endbereich 54 der Steuerkurve 50, der mit den Betätigungsabschnitten 46 der einzelnen Schiebereinrichtungen 44 in Eingriff gelangt, ohne diese zunächst aus der geschlossenen zweiten Stellung zu bewegen. Gleiches gilt für die geradlinigen Bereiche 58, entlang derer die Schiebeeinrichtungen 44 jeweils in der geschlossenen zweiten Stellung verbleiben. Wird jedoch der angewinkelten Bereich 56 erreicht, werden der entsprechende Betätigungsabschnitt 46 und damit auch die dazugehörige Schiebereinrichtung 44 in die offene Stellung bewegt, sodass die über die Angussstelle 32 zugeführte Formmasse in den Objektformbereich 38 eintreten kann. In der Bewegungsrichtung V betrachtet hinter dem angewinkelten Bereich 56 nehmen die Schiebereinrichtungen 44 hingegen wieder ihre geschlossenen zweiten Stellungen ein. Hierdurch wird die noch flüssige Formmasse in den Verteilbereichen 40 von dem Objektformbereich 38 getrennt, sodass keine störenden Angüssen an dem Objekt entstehen.

Das überwiegende geschlossen Halten der Schiebereinrichtungen 44 bietet ferner den Vorteil, dass insbesondere nahe eines axialen Endbereiches des herzustellenden Objektes in bekannter Weise ein Nachdruck aufgebaut werden kann, um eine ausreichende Formausfüllung durch die zugeführte Formmasse sicherzustellen. Da die Schiebereinrichtungen 44 jedoch überwiegend geschlossen sind, kann ein hierbei unerwünschter Austritt von Formmasse aus dem Objektformbereich 38 über die weiteren Verteilbereiche 40 vermieden werden.

Als eine Alternative ist in Figur 4 nahe den Endbereichen 54 jeweils ein strichlinierter Verlauf angedeutet, wonach die Endbereiche 54 die Schiebereinrichtungen 44 bei einem in Eingriff Gelangen (rechter Endbereich 54) zunächst in die geschlossene Stellung versetzen und bei einem in Ausgriff Gelangen (linker Endbereich 54) die Schiebereinrichtungen 44 wieder in die offene Stellung versetzen. Es kann aber auch vorgesehen sein, dass die zweite Stellung beibehalten wird und keine Rückbewegung mittels des linken Endbereichs 54 erfolgt.

Zurückkommend auf Figur 5 erkennt man abschließend, dass der Trennbereich 48 in einem dem Objektformbereich 38 zugewandten Bereich 60 korrespondierend zu einem angrenzenden Wandbereich 62 des Objektformbereiches 38 gewölbt ist. Dabei begrenzt der Trennbereich 48 in der in Figur 5 rechten Stellung, die der geschlossenen zweiten Stellung der Schiebereinrichtung 44 entspricht, auch abschnittsweise den Objektformbereich 38 in der entsprechenden Querschnittsebene. Somit formt der Trennbereich 48 beziehungsweise der zugewandte Bereich 60 die erstarrenden Formmasse und somit hergestellte Objekt teilweise mit. Aufgrund der korrespondierenden Wölbung geschieht dies jedoch ohne wesentliche Grate oder Sprünge an der Oberfläche des Objekts.

Ebenso erkennt man, dass der Trennbereich 48 an seinem freien Ende 64 mit einer scharfartigen Kontur ausgebildet ist. Diese dient als eine Klinge, um flüssige und/oder bereits erstarrte Formmasse leicht durchtrennen zu können. Dabei ist die Kontur des freien Endes derart gewählt beziehungsweise angeschrägt, dass die Formmasse in Richtung des Verteilbereiches 40 verschoben werden kann.

Mit der vorstehenden Lösung kann Formmasse aus dem Verteilbereich 40 bereits unmittelbar während des Gießvorgangs von dem Objektformbereich 38 abgetrennt werden, sodass an den hergestellten Kabelbauteilen keine Störkonturen in Form von erstarrten Angüssen bestehen bleiben. Die Kabel können somit nach einem Trennen der Einsatz-Formhälften 20 unmittelbar dem Formeinsatz 18 entnommen werden, ohne dass derartige Angüsse erst nachträglich durch zusätzliche Nachbearbeitungen entfernt werden müssen. Das Entstehen derartiger Angüsse wird stattdessen durch das vorstehend geschilderte Betätigen der Schiebereinrichtungen 44 nach Maßgabe der Relativbewegung von vornherein unterbunden.

## Patentansprüche

1. Vorrichtung (10) zum Herstellen von Objekten aus einer erstarrenden Formmasse, umfassend:
- einen Zuführbereich (12) mit wenigstens einer Angussstelle (32) zum Zuführen der Formmasse, und
- einen Formeinsatz (18), der zumindest anteilig eine Kavität (36) begrenzt, in der die über die Angussstelle (32) zugeführte Formmasse aufnehmbar ist, wobei die Kavität (36) wenigstens einen Objektformbereich (38) umfasst, der das herzustellende Objekt formt, und wenigstens einen Verteilbereich (40), der dazu eingerichtet ist, zugeführte Formmasse zu dem Objektformbereich (38) zu leiten, und ferner umfassend wenigstens eine Schiebereinrichtung (44), die in einer ersten Stellung dazu ausgebildet ist, eine Verbindung des Objektformbereiches (38) und des Verteilbereiches (40) zu ermöglichen, und in einer zweiten Stellung den Objektformbereich (38) und den Verteilbereich (40) voneinander zu trennen,
wobei der Formeinsatz (18) entlang einer Bewegungsachse (B) relativ zu dem Zuführbereich (12) bewegbar ist,
wobei die Schiebereinrichtung (44) nach Maßgabe der Relativbewegung betätigbar ist, und
wobei die Vorrichtung **dadurch gekennzeichnet ist, dass** sie mehrere Verteilbereiche (40) mit jeweils einer Schiebereinrichtung (44) umfasst.

2. Vorrichtung (10) nach Anspruch 1,
wobei der Objektformbereich (38) dazu ausgebildet ist, ein im Wesentlichen längliches Objekt herzustellen, und die Bewegungsachse (B) sich im Wesentlichen parallel zu einer Längsachse (L) des Objekts erstreckt oder mit dieser zusammenfällt.

3. Vorrichtung (10) nach Anspruch 1 oder 2,
wobei die Schiebereinrichtung (44) derart betätigbar ist, dass diese zumindest vorübergehend von der ersten in die zweiten Stellung wechselt oder umgekehrt.

4. Vorrichtung (10) nach einem der vorangehenden Ansprüche,
wobei die Schiebereinrichtung (44) derart betätigbar ist, dass sie die zweite Stellung zumindest dann einnimmt, nachdem die Angussstelle (32) dem Verteilbereich (40) Formmasse zugeführt hat.

5. Vorrichtung (10) nach einem der vorangehenden Ansprüche,
wobei die Schiebereinrichtung (44) mechanisch betätigbar ist, insbesondere aufgrund einer im Rahmen der Relativbewegung erzeugten Kraft.

6. Vorrichtung (10) nach einem der vorangehenden Ansprüche,
wobei die Schieberichtung (44) einen Betätigungsabschnitt (46) umfasst, der dazu ausgebildet ist, zumindest im Rahmen der Relativbewegung mit einem Betätigungsbereich der Vorrichtung zu wechselwirken, und insbesondere wobei das Wechselwirken ein zumindest temporäres Abstützen und/oder einen Eingriff zwischen dem Betätigungsbereich und dem Betätigungsabschnitt (46) einschließt.

7. Vorrichtung (10) nach Anspruch 6,
wobei das Wechselwirken eine Bewegung des Betätigungsabschnitts (46) erzeugt, wobei die Bewegung in einem Winkel zu der Bewegungsachse (B) und insbesondere im Wesentlichen orthogonal zu der Bewegungsachse (B) erfolgt.

8. Vorrichtung (10) nach Anspruch 6 oder 7,
wobei der Betätigungsbereich einen konturierten Steuerbereich (50) umfasst, der dazu ausgebildet ist, mit dem Betätigungsabschnitt (46) zu wechselwirken,
und insbesondere wobei der Steuerbereich (50) sich zumindest temporär an dem Betätigungsabschnitt (46) abstützt.

9. Vorrichtung (10) nach einem der vorangehenden Ansprüche,
wobei die Schiebereinrichtung (44) in eine von der ersten Stellung und der zweiten Stellung vorgespannt ist und, optional, in die jeweils andere Stellung nach Maßgabe der Relativbewegung bewegbar ist.

10. Vorrichtung (10) nach einem der vorangehenden Ansprüche,
wobei der Objektformbereich (38) dazu ausgebildet ist, das herzustellende Objekt entlang wenigstens der Hälfte von dessen Länge zu formen und insbesondere im Wesentlichen entlang dessen gesamter Länge zu formen.

11. Vorrichtung (10) nach einem der vorangehenden Ansprüche,
wobei der Zuführbereich (12) in einem im Wesentlichen feststehenden Abschnitt entlang der Bewegungsachse (B) ausgebildet ist.

12. Vorrichtung (10) nach einem der vorangehenden Ansprüche,
wobei die Verteilbereiche (40) entlang der Bewegungsachse (B) aneinandergereiht und jeweils im Rahmen der Relativbewegung betätigbar sind.

13. Vorrichtung (10) nach Anspruch 12,
die dazu ausgebildet ist, zumindest eine Schiebereinrichtung (44) in die erste Stellung zu versetzen, die einem Verteilbereich (40) zugeordnet ist, durch den eine Formmasse unmittelbar zugeführt werden soll, und wobei wenigstens eine weitere Schiebereinrichtung (44) die zweite Stellung einnimmt oder in diese versetzt wird.

14. Vorrichtung (10) nach einem der vorangehenden Ansprüche,
wobei die Schiebereinrichtung (44) in einem dem Objektformbereich (38) zugewandten Bereich korrespondierend zu einem angrenzenden Abschnitt des Objektformbereiches geformt ist.

15. Verfahren zum Herstellen von Objekten aus einer erstarrenden Formmasse mithilfe einer Vorrichtung (10),
wobei die Vorrichtung (10) einen Zuführbereich (12) mit wenigstens einer Angussstelle (32) zum Zuführen der Formmasse umfasst, und einen Formeinsatz (18), der zumindest anteilig eine Kavität (36) begrenzt, in der die über die Angussstelle (32) zugeführte Formmasse aufnehmbar ist, wobei die Kavität (36) wenigstens einen Objektformbereich (38) umfasst, der das herzustellende Objekt formt, und wenigstens einen Verteilbereich (40), der dazu eingerichtet ist, zugeführte Formmasse zu dem Objektformbereich (38) zu leiten, und ferner wenigstens eine Schiebereinrichtung (44) umfasst, die in einer ersten Stellung dazu ausgebildet ist, eine Verbindung des Objektformbereiches (38) und des Verteilbereiches (40) zu ermöglichen, und in einer zweiten Stellung den Objektformbereich (38) und den Verteilbereich (40) voneinander zu trennen, und
wobei die Vorrichtung mehrere Verteilbereiche (40) mit jeweils einer Schiebereinrichtung (44) umfasst,
umfassend die Schritte:
- Bewegen des Formeinsatzes (18) entlang einer Bewegungsachse (B) relativ zu dem Zuführbereich (12), und
- Betätigen der Schiebereinrichtung (44) nach Maßgabe der Relativbewegung.

## Claims

1. An apparatus (10) for producing objects from a solidifying moulding compound, comprising:
- a feed region (12) with at least one sprue point (32) for supplying the moulding compound, and
- a mould insert (18), which delimits at least in part a cavity (36), in which the moulding compound supplied via the sprue point (32) can be received,
wherein the cavity (36) comprises at least one object moulding region (38), which moulds the object that is to be produced, and at least one distribution region (40), which is adapted to direct supplied moulding compound to the object moulding region (38),
and further comprising at least one pusher device (44) which, in a first position, is adapted to allow connection of the object moulding region (38) and the distribution region (40) and, in a second position, to separate the object moulding region (38) and the distribution region (40) from each other,
wherein the mould insert (18) is movable relative to the feed region (12) along a movement axis (B),
wherein the pusher device (44) is acuatable according to the relative movement, and wherein the apparatus is **characterised in that** it comprises a plurality of distribution regionas (40) each with a pusher device (44).

2. The apparatus (10) according to claim 1,
wherein the object moulding region (38) is adapted to produce a substantially elongate object, and the movement axis (B) extends substantially parallel to or coincides with a longitudinal axis (L) of the object.

3. The apparatus (10) according to claim 1 or 2,
wherein the pusher device (44) is actuatable in such a manner that it changes at least temporarily from the first position to the second position or vice versa.

4. The apparatus (10) according to one of the previous claims,
wherein the pusher device (44) is actuatable in such a manner that it assumes the second position at least once the sprue point (32) has supplied moulding compound to the distribution region (40).

5. The apparatus (10) according to one of the preceding claims,
wherein the pusher device (44) is mechanically actuatable, in particular on the basis of a force generated within the scope of the relative movement.

6. The apparatus (10) according to one of the preceding claims,
wherein the pusher device (44) comprises an actuating portion (46) which is configured to interact, at least within the scope of the relative movement, with an actuating region of the device, and in particular wherein the interaction includes at least temporary abutment and/or engagement between the actuating region and the actuating portion (46).

7. The apparatus (10) according to claim 6,
wherein the interaction generates a movement of the actuating portion (46), wherein the movement takes place at an angle to the movement axis (B) and in particular substantially orthogonal to the movement axis (B).

8. The apparatus (10) according to claim 6 or 7,
wherein the actuating region comprises a contoured control region (50) adapted to interact with the actuating portion (46),
and in particular wherein the control region (50) abuts the actuating portion (46) at least temporarily.

9. The apparatus (10) according to one of the preceding claims,
wherein the pusher device (44) is biased into one of the first position and the second position and, optionally, is movable to the respective other position according to the relative movement.

10. The apparatus (10) according to one of the previous claims,
wherein the object moulding region (38) is adapted to mould the object that is to be produced along at least half of its length, and in particular to mould it substantially along its entire length.

11. The apparatus (10) according to one of the preceding claims,
wherein the feed region (12) is formed in a substantially fixed portion along the movement axis (B).

12. The apparatus (10) according to one of the previous claims,
wherein the distribution regions (40) are arranged one behind the other along the movement axis (B) and are each actuatable within the scope of the relative movement.

13. The apparatus (10) according to claim 12,
which is configured to move into the first position at least one pusher device (44), that is associated with a distribution region (40) through which a moulding compound is to be supplied directly, and wherein at least one further pusher device (44) assumes or is moved into the second position.

14. The apparatus (10) according to one of the preceding claims,
wherein the pusher device (44), in a region facing the object moulding region (38), has a shape corresponding to an adjacent portion of the object moulding region.

15. A method for producing objects from a solidifying moulding compound by means of an apparatus (10),
wherein the apparatus (10) comprises a feed region (12) having at least one sprue point (32) for supplying the moulding compund, and a mould insert (18) which delimits at least in part a cavity (36) in which the moulding compund supplied via the sprue point (32) can be received, wherein the cavity (36) comprises at least one object moulding region (38), which moulds the object that is to be produced, and at least one distribution region (40), which is adapted to guide supplied moulding compund to the object moulding region (38), and further comprises at least one pusher device (44), which is adapted, in a first position, to allow the object moulding region (38) and the distribution region (40) tob e connected, and, in a second position, to separate the object moulding region (38) and the distribution region (40) from one another, and
wherein the apparatus comprises a plurality of distribution regions (40) each with a pusher device (44),
comprising the steps:
- moving the mould insert (18) relative to the feed region (12) along a movement axis (B), and
- actuating the pusher device (44) according to the relative movement.

## Revendications

1. Dispositif (10) pour la fabrication d'objets à partir d'une matière à mouler solidifiable, comprenant :
- une zone d'amenée (12) avec au moins un point d'injection (32) pour l'amenée de la matière à mouler, et
- un insert de moule (18) délimitant au moins en partie une cavité (36) dans laquelle la matière à mouler amenée par le point d'injection (32) peut être reçue,
dans lequel la cavité (36) comprend au moins une zone de moulage d'objet (38) qui moule l'objet à fabriquer, et au moins une zone de distribution (40) qui est conçue pour diriger la matière à mouler amenée vers la zone de moulage d'objet (38),
et comprenant en outre au moins un moyen coulissant (44) qui est conçu, dans une première position, pour permettre une liaison entre la zone de moulage d'objet (38) et la zone de distribution (40) et, dans une deuxième position, pour séparer la zone de moulage d'objet (38) et la zone de distribution (40) l'une de l'autre,
dans lequel l'insert de moulage (18) est mobile le long d'un axe de mouvement (B) par rapport à la zone d'amenée (12),
dans lequel le moyen coulissant (44) peut être actionné en fonction du mouvement relatif, et
dans lequel le dispositif est **caractérisé en ce qu'**il comprend plusieurs zones de distribution (40) comprenant chacune un moyen coulissant (44).

2. Dispositif (10) selon la revendication 1,
dans lequel la zone de moulage d'objet (38) est conçue pour fabriquer un objet sensiblement allongé, et l'axe de mouvement (B) s'étend sensiblement parallèlement à un axe longitudinal (L) de l'objet ou coïncide avec celui-ci.

3. Dispositif (10) selon la revendication 1 ou 2,
dans lequel le moyen coulissant (44) peut être actionné de telle sorte qu'il passe au moins temporairement de la première à la deuxième position ou inversement.

4. Dispositif (10) selon l'une des revendications précédentes,
dans lequel le moyen coulissant (44) peut être actionné de telle sorte qu'il prend la deuxième position au moins après que le point d'injection (32) a amené la matière à mouler dans la zone de distribution (40).

5. Dispositif (10) selon l'une des revendications précédentes,
dans lequel le moyen coulissant (44) peut être actionné mécaniquement, en particulier sur la base d'une force produite dans le cadre du mouvement relatif.

6. Dispositif (10) selon l'une des revendications précédentes,
dans lequel le moyen coulissant (44) comprend une partie d'actionnement (46) qui est conçue pour interagir avec une zone d'actionnement du dispositif au moins dans le cadre du mouvement relatif, et en particulier dans lequel l'interaction inclut un appui au moins temporaire et/ou un engagement entre la zone d'actionnement et la partie d'actionnement (46).

7. Dispositif (10) selon la revendication 6,
dans lequel l'interaction produit un mouvement de la partie d'actionnement (46),
dans lequel le mouvement a lieu selon un angle par rapport à l'axe de mouvement (B) et en particulier sensiblement orthogonalement à l'axe de mouvement (B).

8. Dispositif (10) selon la revendication 6 ou 7,
dans lequel la zone d'actionnement comprend une zone de commande profilée (50) qui est conçue pour interagir avec la partie d'actionnement (46),
et en particulier dans lequel la zone de commande (50) s'appuie au moins temporairement sur la partie d'actionnement (46).

9. Dispositif (10) selon l'une des revendications précédentes,
dans lequel le moyen coulissant (44) est précontraint dans l'une des première et deuxième positions et, éventuellement, est déplaçable vers l'autre position respective en fonction du mouvement relatif.

10. Dispositif (10) selon l'une des revendications précédentes,
dans lequel la zone de moulage d'objet (38) est conçue pour mouler l'objet à fabriquer sur au moins la moitié de sa longueur et en particulier pour le mouler sensiblement sur toute sa longueur.

11. Dispositif (10) selon l'une des revendications précédentes,
dans lequel la zone d'amenée (12) est formée dans une partie sensiblement fixe le long de l'axe de mouvement (B).

12. Dispositif (10) selon l'une des revendications précédentes,
dans lequel les zones de distribution (40) sont alignées le long de l'axe de mouvement (B) et peuvent être actionnées chacune dans le cadre du mouvement relatif.

13. Dispositif (10) selon la revendication 12,
qui est conçu pour déplacer dans la première position au moins un moyen coulissant (44) qui est associé à une zone de distribution (40) à travers laquelle une matière à mouler doit être amenée directement, et dans lequel au moins un autre moyen coulissant (44) prend la deuxième position ou est déplacé dans cette position.

14. Dispositif (10) selon l'une des revendications précédentes,
dans lequel le moyen coulissant (44) est formé dans une zone tournée vers la zone de moulage d'objet (38) correspondant à une partie adjacente de la zone de moulage d'objet.

15. Procédé de fabrication d'objets à partir d'une matière à mouler solidifiable à l'aide d'un dispositif (10),
dans lequel le dispositif (10) comprend une zone d'amenée (12) avec au moins un point d'injection (32) pour l'amenée de la matière à mouler, et un insert de moule (18) délimitant au moins en partie une cavité (36) dans laquelle la matière à mouler amenée par le point d'injection (32) peut être reçue, dans lequel la cavité (36) comprend au moins une zone de moulage d'objet (38) qui moule l'objet à fabriquer, et au moins une zone de distribution (40) qui est conçue pour diriger la matière à mouler amenée vers la zone de moulage d'objet (38), et comprend en outre au moins un moyen coulissant (44) qui est conçu, dans une première position, pour permettre une liaison entre la zone de moulage d'objet (38) et la zone de distribution (40) et, dans une deuxième position, pour séparer la zone de moulage d'objet (38) et la zone de distribution (40) l'une de l'autre, et
dans lequel le dispositif comprend plusieurs zones de distribution (40) présentant chacune un moyen coulissant (44),
comprenant les étapes de :
- déplacer l'insert de moule (18) le long d'un axe de mouvement (B) par rapport à la zone d'amenée (12), et
- actionner le moyen coulissant (44) en fonction du mouvement relatif.
